# EUROPÄISCHE PATENTSCHRIFT

(11) **EP 0 464 429 B1**
(45) Veröffentlichungstag und Bekanntmachung des Hinweises auf die Patenterteilung: **06.09.1995**
(21) Anmeldenummer: 91109812.7
(22) Anmeldetag: 14.06.1991
(51) Int. Cl.: B29C 61/06, H02G 15/18

(54) **Verfahren zum Herstellen einer wärmerückstellbaren Werkstoffbahn**
Method of making a heat-recoverable sheet
Procédé pour la fabrication d'une feuille thermorétractable

(30) Priorität: 30.06.1990 DE 4020931
(43) Veröffentlichungstag der Anmeldung: 08.01.1992
(73) Patentinhaber: Stewing Nachrichtentechnik GmbH & Co. KG Berlin, 13599 Berlin (DE)
(72) Erfinder: Ostermann, Bernd, W-1000 Berlin 15 (DE); Stupp, Winfried, W-5800 Hagen 1 (DE); Becker, Friedrich, W-5800 Hagen 7 (DE); Nicolai, Norbert, W-4270 Dorsten 1 (DE)
(74) Vertreter: Honke, Manfred, Dr.-Ing.

(56) Entgegenhaltungen:
- EP-A- 0 350 732
- WO-A-88/09263
- DE-A- 3 831 996
- DE-A- 3 833 415
- US-A- 3 669 157

## Beschreibung

Die Erfindung betrifft ein Verfahren zum Herstellen einer wärmerückstellbaren Werkstoffbahn aus zumindest einem polymeren Kunststoffmaterial und einer rißbegrenzenden Verstärkungseinlage, insbesondere zur Bildung von auf Kabelverbindungen und/oder -abzweigungen aufschrumpfbaren Umhüllungen. Im Rahmen der Erfindung lassen sich mit der wärmerückstellbaren Werkstoffbahn beispielsweise Schrumpfmuffen, Schrumpfmanschetten, Schrumpfgehäuse, Schrumpfrohre oder dergleichen herstellen.

Es sind langgestreckte Formstränge aus einem vernetzten Polymer zur Herstellung von wärmerückstellbaren Gegenständen bekannt. Bei diesen Gegenständen kann es sich z. B. um ein wärmeschrumpfendes Band handeln, welches dadurch gekennzeichnet ist, daß eine Vielzahl von parallel zueinander verlaufenden Formsträngen in einer Schicht aus einem thermoplastischem Polymer eingebettet sind. Dieses wärmeschrumpfende Band wird so hergestellt, daß man eine Vielzahl von Formsträngen parallel in einen Extruder einführt und mit einer Schicht aus einem thermoplastischem Polymer umhüllt. Demzufolge besteht das wärmeschrumpffähige Band aus einer Vielzahl von parallel zueinander verlaufenden Formsträngen, welche in einer Schicht aus einem thermoplastischem Polymer eingebettet sind. Zusätzlich kann noch ein Gewebe vorgesehen sein, welches die Reißfestigkeit des wärmeschrumpffähigen Bandes erhöhen soll. Die Formstränge werden mit einem Faden oder Band wendelartig umwickelt, wobei diese Umwicklung oder Umspinnung aus mindestens einem Strang aus bei Erweichungstemperatur des Formstranges hochfestem Werkstoff besteht. Zwar kann jeder einzelne Formstrang in seinem Innern auch als Mehrkomponentenfaden ausgebildet sein, insgesamt sind jedoch allenfalls Mehrkomponentenfäden realisiert, welche mit einem Faden umwickelt werden, der als Verstärkungsschicht für die Formstränge wirkt und dem Band in Schrumpfrichtung eine ausreichend hohe Reißfestigkeit verleiht. Durch diese Umwicklung wird allerdings nur ein punktuelles Verschweißen der Formstränge zugelassen, so daß im Ergebnis eine lediglich indirekte Verbindung der Formstränge realisiert ist. Dies führt dazu, daß es hier nicht zur Ausbildung einer Verbundstruktur kommt, bzw. nicht zum Schmelzen und Verbinden des Hüllenmaterials unter Druck/Temperaturbeaufschlagung (vgl. EP-OS-0 350 732).

Es ist weiter ein Schlauchgewebe zum Schutze bzw. zur Isolierung langgestreckter Gegenstände bekannt, welches in Radialrichtung wärmeschumpffähig und in Axialrichtung wärmebeständig ist sowie eine wärmehärtende Imprägnierung oder Beschichtung aufweist, um die Steifigkeit des im Zuge eines Schrumpfvorganges entstehenden Produktes zu erhöhen. Die Wärmeschrumpffähigkeit in Radialrichtung wird mittels wärmeschrumpffähiger Schußfäden bzw. Füllfäden aus polymerem Kunststoff erreicht, die Wärmebeständigkeit in Axialrichtung wird mittels nicht wärmeschrumpffähiger Kettfäden erreicht (vgl. US-PS 3 669 157).

Ferner kennt man ein wärmeschrumpffähiges Produkt, welches im wesentlichen aus einem wärmeschrumpffähigen Gewebe oder dergleichen textilen Flächengebilde und einer polymeren Beschichtung besteht. Die wärmeschrumpffähigen Gewebefäden einerseits und das polymere Beschichtungsmaterial andererseits werden durch die Angaben mechanischer Parameter wie Schrumpfspannung, Schrumpftemperatur, Dehnungs/Temperatur-Profil, Bruchdehnung usw. spezifiziert (vgl. EP-PS 0 243 985).

Bekannt ist weiter ein Verfahren zum Schützen eines Substrates zur Umgebung hin, welches eine Kabelverbindung oder -abzweigung darin aufweist, indem das Substrat mit einer in ihren Abmessungen wärmerückstellbaren Manschette umgeben und diese Manschette erwärmt wird, um einen Schrumpfeffekt zu erreichen. Die Manschette weist ein textiles Gebilde mit Kunststoffäden auf, die sich bei Erwärmung rückstellen und eine Mindestzugfestigkeit bei ihrer Rückstelltemperatur aufweisen, wobei das textile Gebilde eine Außenfläche besitzt, die mit einer Schicht aus polymerem Material vorgegebener Dicke überzogen ist und wobei ferner das polymere Material ohne zu fließen erweichbar ist, wenn es erwärmt wird, um sich der Rückstellung der Manschette anzupassen. Die Schicht aus polymerem Material ist haftend mit den Kunststoffäden verbunden und bildet gleichsam eine Deckschicht. Die Manschette wird mit einer Brennerflamme erwärmt, welche gegen die beschichtete Oberfläche gerichtet wird (vgl. EP 0 117 026).

Nach einem Verfahren zur Herstellung einer wärmerückstellbaren Werkstoffbahn aus Kunststoff, bei dem in Längs- und Querrichtung der Werkstoffbahn verlaufende Stränge in einer Schicht aus Kunststoff eingebettet sind, wird zunächst eine Matte oder ein Gewebe aus sich kreuzenden Strängen aus nicht oder nur geringfügig reckbarem Material geformt, wobei zumindest die in einer Richtung verlaufenden Stränge nach Art einer Wendel geformt sind. Die Matte oder das Gewebe wird in einem Kunststoffmaterial eingebettet. Die so hergestellte Werkstoffbahn wird in Richtung der in Form einer Wendel verlaufenden Stränge gereckt. In diesem Fall ist die Kunststoffmatrix bzw. das aus Kunststoff bestehende Deckmaterial wärmerückstellbar, während die in die Kunststoffmatrix eingebettete Matte bzw. das Gewebe selbst aufgrund des wendelförmigen Verlaufes der Stränge eine Dehnungsreserve aufweist, obwohl gerade das Material der Stränge selbst nicht dehnbar ist, so daß die Werkstoffbahn mit der eingebetteten Matte bzw. dem Gewebe auf üblicherweise verwendete Reckgrade von 400 % und mehr gereckt werden kann. Das Einbetten der Matte oder des Gewebes in das Kunststoffmaterial bzw. die Kunststoffmatrix erfolgt durch Extrudieren, Kaschieren oder Laminieren, im ersteren Fall besteht die Möglichkeit, daß die Matte bzw. das Gewebe in einem kontinuierlichen Arbeitsgang mit einem silangepfropften Polyethylen durch Extrusion umspritzt wird und das Polyethylen in Gegenwart von Wasser vernetzt wird (vgl. DE 38 33 415).

Nach einem anderen bekannten Verfahren zum Herstellen von wärmerückstellbaren Werkstoffbahnen, bei dem wärmerückstellbare Fäden aus vernetztem Kunststoff zwischen zwei Schichten aus thermoplastischem Kunststoff eingebettet werden, ist es bekannt, daß eine Mehrzahl von parallel zueinander in einer Ebene verlaufenden Einzelfäden in kontinuierlicher Arbeitsweise beidseitig mit Bahnen aus thermoplastischem Kunststoff kaschiert werden, und daß zwischen den Einzelfäden und zumindest einer Bahn eine Schicht aus Fäden aus bei Wärmerückstelltemperatur reißfestem Werkstoff angeordnet wird (vgl. DE 38 31 996).

Außerdem kennt man ein Verfahren zum Herstellen einer wasserdichten Kabelverbindung von zwei oder mehr Kabelenden mit einer Folie aus polymerem Material, welche erwärmt wird und im Zuge des Abkühlens auf die Kabelenden aufschrumpft. Auf die Folie ist ein ein- oder zweidimensional schrumpfendes Gewirke aufgebracht (vgl. DE-OS 31 50 544).

Im übrigen ist es bekannt, daß wärmeschrumpfende Werkstoffbahnen aus polymerem Folienmaterial im Zuge der Wärmezufuhr gelegentlich zur Rißbildung neigen. Diese Neigung zur Rißbildung ist dann besonders groß, wenn die Folienoberfläche beschädigt ist, beispielsweise Kerben, Schnitte, Kratzer oder dergleichen aufweist, von denen die Rißbildung ausgeht und sich fortpflanzt. Um die Fortpflanzung eines einmal entstandenen Risses zu unterbinden, kennt man ein Verbundlaminat aus einer Polyethylenfolie und einem Polyalkylenfasergewebe. In diesem Fall weist das Verbundlaminat eine biaxiale Schrumpfung von zumindest 7,5 % in der einen Richtung und zumindest 15 % in der anderen Richtung auf, wenn sie in einem Flüssigkeitsbad bei einer Temperatur von etwa 120° C erhitzt wird (vgl. US-PS 3 058 863).

Der Erfindung liegt die Aufgabe zugrunde, ein Verfahren anzugeben, wonach sich eine wärmerückstellbare Werkstoffbahn in einfacher und kostensparender Weise herstellen läßt, die sich einerseits durch Rißbeständigkeit auszeichnet, andererseits durch eine in zumindest eine Richtung wohldefiniert einstellbare Schrumpfung.

Zur Lösung dieser Aufgabe schlägt die Erfindung ein Verfahren zum Herstellen einer wärmerückstellbaren Werkstoffbahn aus zumindest einem polymeren Kunststoffmaterial und einer rißbegrenzenden Verstärkungseinlage, insbesondere zur Bildung von auf Kabelverbindungen und/oder -abzweigungen aufschrumpfbaren Umhüllungen vor, bei dem Mehrkomponentenfäden mit einer Kunststoffhülle und einem chemisch vernetzbaren Fadenkern aus Kunststoff oder einem Elast erzeugt werden, die Fadenkerne vernetzt werden, die so behandelten Mehrkomponentenfäden um ein vorgegebenes Maß verstreckt werden, dann eine portionierte Mehrzahl verstreckter Mehrkomponentenfäden einschichtig oder mehrschichtig unter Einstellung einer vorgegebenen Hauptschrumpfrichtung angeordnet und unter Druck/Temperaturbeaufschlagung bis zum Schmelzen und Verbinden des Hüllenmaterials verpreßt werden. - Diese Maßnahmen der Erfindung haben zunächst einmal zur Folge, daß ein homogener Materialverbund zwischen der äußeren Fadenbeschichtung und den Fadenkernen erreicht wird. Ferner entsteht eine Verbundstruktur mit vernetzten und gedehnten Fadensträngen, welche bevorzugt parallel oder in einem bestimmten Winkel angeordnet sind. Auch eine Verbindung mit nicht wärmerückstellbaren, senkrecht zur Hauptschrumpfrichtung liegenden Fäden ist denkbar. Eine derartige Verbundstruktur zeichnet sich durch eine hohe, exakt einstellbare Wärmeschrumpffähigkeit in Längsrichtung der Fadenstränge aus, beispielsweise 40 % bis 90 %, während ein Schrumpfen orthogonal zur Längsrichtung der gedehnten Fadenstränge im Bereich von 0 % bis 50 % liegt. In diesem Zusammenhang ist von Bedeutung, daß die Fadenstränge gleichsam Rißbarrieren bilden, d. h. ein entstandener Riß kann sich lediglich bis zu dem nächsten Fadenstrang fortsetzen und wird dort aufgehalten, so daß sich die erfindungsgemäße Verbundstruktur nicht nur durch wohldefinierte Schrumpfverhältnisse in insbesondere Längsrichtung der Fadenstränge auszeichnet, sondern darüber hinaus auch durch hohe Reißfestigkeit. Hinzu kommt, daß sich die erfindungsgemäße Werkstoffbahn einfach und kostensparend herstellen läßt. - Ähnliche technische Wirkungen werden nach einem anderen Vorschlag der Erfindung mit selbständiger Bedeutung bei einem Verfahren zum Herstellen einer wärmerückstellbaren Werkstoffbahn aus zumindest einem polymeren Kunststoffmaterial und einer rißbegrenzenden Verstärkungseinlage, insbesondere zur Bildung von auf Kabelverbindungen und/oder -abzweigungen aufschrumpfbaren Umhüllungen, erreicht, bei dem Mehrkomponentenfäden mit einer Kunststoffhülle und einem chemisch vernetzbaren Fadenkern aus Kunststoff oder einem Elast erzeugt werden, die Fadenkerne vernetzt werden, die so behandelten Mehrkomponentenfäden gewellt und mit gewellter Orientierung um ein vorgegebenes Maß verstreckt oder umgekehrt erst um ein vorgegebenes Maß verstreckt und dann gewellt werden, dann eine portionierte Mehrzahl gewellter Mehrkomponentenfäden unter Bildung eines mattenartigen Geflechts ein- oder mehrschichtig unter Einstellung einer vorgegebenen Hauptschrumpfrichtung mit quer zur Hauptschrumpfrichtung ineinandergreifenden Wellentälern bzw. Wellenbergen nach Art eines Maschenzauns angeordnet und unter Druck/Temperatur-Beaufschlagung bis zum Schmelzen und Verbinden des Hüllenmaterials verpreßt werden. In diesem Fall kann man auf orthogonal zur Hauptschrumpfrichtung liegende Fäden aufgrund der Verflechtung der in Hauptschrumpfrichtung ausgerichteten Mehrkomponentenfäden verzichten, weil eine hinreichende Querverbindung durch die ineinandergreifenden Wellentäler bzw. Wellenberge der gewellten Fadenstränge erreicht wird.

Weitere erfindungswesentliche Merkmale sind im folgenden aufgeführt. So sieht die Erfindung vor, daß die Mehrkomponentenfäden mit Kunststoff/Silan-Kernen oder Peroxid-Kernen erzeugt und im Wege einer Konditionierung vernetzt werden. Ferner besteht auch die Möglichkeit, daß eine Mehrzahl verstreckter Mehrkomponentenfäden dicht bei dicht oder in engen Abständen in Parallellage nebeneinandergelegt und mit wärmestabilen nicht schrumpfenden Fäden quer zur Hauptschrumpfrichtung gelegt bzw. im Wege einer Bindung fixiert, z. B. verflochten, verknüpft oder verwebt werden. Die Mehrkomponentenfäden werden vorzugsweise im Wege der Coextrusion hergestellt. Weiter empfiehlt die Erfindung, daß die Mehrkomponentenfäden mit einer Kunststoffhülle aus Polyethylen und mit einem Fadenkern aus mit Silan belegtem Polyethylen coextrudiert werden. Durch im wesentlichen identische Kunststoffverwendung für Hülle und Kern wird eine besonders homogene Verbundstruktur mit Fadensträngen erreicht. Für den jeweils nächsten Fadenstrang in Richtung einer Rißausbreitung ist der Kerbradius unendlich und ein Weiterreißen ist unmöglich. Tatsächlich bilden die vernetzten und verstreckten Fadenstränge Rißbarrieren. Die Mehrkomponentenfäden werden erfindungsgemäß mit einer Temperatur im Bereich von 80 °C mit 190 °C, vorzugsweise bei 80 °C bis 95 °C in wäßriger Atmosphäre gelagert. Die Oberfläche der Verbundstruktur kann nachträglich mit einer geringen Oberflächendosis von 3 kGy bis 30 kGy vernetzt bzw. durch eine nachträgliche Beschichtung mittels unverstreckten Materials verstärkt werden.

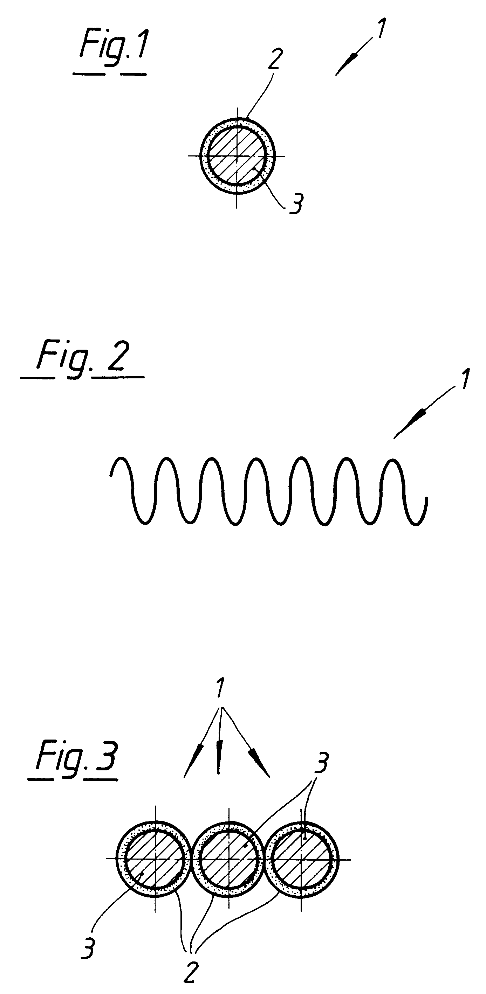

Im folgenden wird die Erfindung anhand einer lediglich ein Ausführungsbeispiel darstellenden Zeichnung näher erläutert; es zeigen
- Fig. 1: einen Mehrkomponentenfaden zur Durchführung des erfindungsgemäßen Verfahrens im Querschnitt,
- Fig. 2: den Gegenstand nach Fig. 1 in gewellter Ausführungsform,
- Fig. 3: mehrere in Parallellage nebeneinander gelegte Mehrkomponentenfäden nach Fig. 1 im Querschnitt und vor ihrer Verpressung,
- Fig. 4: den Gegenstand nach Fig. 3 nach erfolgter Verpressung und folglich Verschmelzung des Hüllenmaterials unter Bildung einer Werkstoffbahn mit parallel liegenden Fadensträngen und
- Fig. 5: in perspektivischer Darstellung und ausschnittsweise sowie teilweise aufgebrochen eine Werkstoffbahn nach dem Verpressen von gewellten und ineinandergreifenden Mehrkomponentenfäden gemäß Fig. 2.

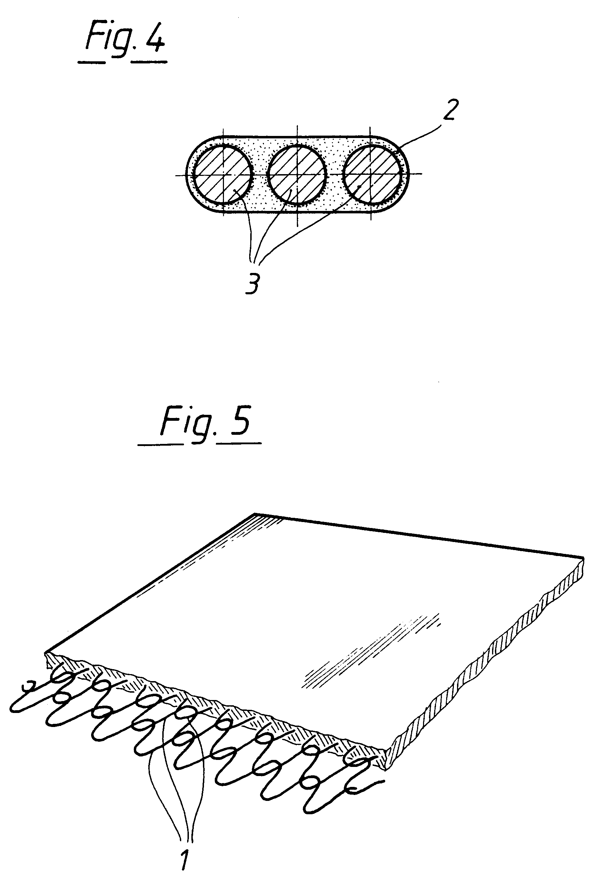

Nach Lehre der Erfindung werden Mehrkomponentenfäden 1 mit einer Kunststoffhülle 2 und einem Fadenkern 3 coextrudiert. Der Fadenkern 3 besteht aus einem chemisch vernetzbaren Kunststoff oder Elast. Nach dem Ausführungsbeispiel besteht die Kunststoffhülle 2 aus Polyethylen und der Fadenkern 3 aus mit Silan belegtem Polyethylen. In diesem Fall erfolgt die Vernetzung der Fadenkerne im Wege einer Konditionierung. Die so behandelten Mehrkomponentenfäden 1 werden um ein vorgegebenes Maß verstreckt. Dann wird nach dem einen Ausführungsbeispiel gemäß Fig. 4 eine portionierte Mehrzahl verstreckter Mehrkomponentenfäden 1 dicht bei dicht in Parallellage nebeneinandergelegt und unter Druck- und Temperaturanwendung bis zum Schmelzen und Verbinden des Hüllenmaterials verpreßt. Nach dem anderen Ausführungsbeispiel gemäß Fig. 5 werden die Mehrkomponentenfäden 1 erst verstreckt und anschließend gewellt. Dann wird eine portionierte Mehrzahl gewellter Mehrkomponentenfäden unter Bildung eines mattenartigen Geflechts einschichtig unter Einstellung einer vorgegebenen Hauptschrumpfrichtung mit quer zur Hauptschrumpfrichtung ineinandergreifenden Wellentälern bzw. Wellenbergen angeordnet und ebenfalls unter Druck bzw. Temperaturanwendung bis zum Schmelzen und Verbinden des Hüllenmaterials verpreßt. In diesem Fall ist hinreichende Querstabilität durch die ineinandergreifenden gewellten Mehrkomponentenfäden 1 gewährleistet. Bei der Ausführungsform mit den in Parallellage angeordneten Mehrkomponentenfäden 1 kann deren Fixierung mit nicht dargestellten quer zur Hauptschrumpfrichtung aufgelegten oder verbundenen Kunststoffäden erfolgen.

## Patentansprüche

1. Verfahren zum Herstellen einer wärmerückstellbaren Werkstoffbahn aus zumindest einem polymeren Kunststoffmaterial und einer rißbegrenzenden Verstärkungseinlage, insbesondere zur Bildung von auf Kabelverbindungen und/oder -abzweigungen aufschrumpfbaren Umhüllungen, bei dem Mehrkomponentenfäden mit einer Kunststoffhülle und einem chemisch vernetzbaren Fadenkern aus Kunststoff oder einem Elast erzeugt werden, die Fadenkerne vernetzt werden, die so behandelten Mehrkomponentenfäden um ein vorgegebenes Maß verstreckt werden, dann eine portionierte Mehrzahl verstreckter Mehrkomponentenfäden einschichtig oder mehrschichtig unter Einstellung einer vorgegebenen Hauptschrumpfrichtung angeordnet und unter Druck/Temperaturbeaufschlagung bis zum Schmelzen und Verbinden des Hüllenmaterial verpreßt werden.

2. Verfahren zum Herstellen einer wärmerückstellbaren Werkstoffbahn aus zumindest einem polymeren Kunststoffmaterial und einer rißbegrenzenden Verstärkungseinlage, insbesondere zur Bildung von auf Kabelverbindungen und/oder -abzweigungen aufschrumpfbaren Umhüllungen, bei dem Mehrkomponentenfäden mit einer Kunststoffhülle und einem chemisch vernetzbaren Fadenkern aus Kunststoff oder einem Elast erzeugt werden, die Fadenkerne vernetzt werden, die so behandelten Mehrkomponentenfäden gewellt und mit gewellter Orientierung um ein vorgegebenes Maß verstreckt oder umgekehrt erst um ein vorgegebenes Maß verstreckt und dann gewellt werden, dann eine portionierte Mehrzahl gewellter Mehrkomponentenfäden unter Bildung eines mattenartigen Geflechts ein- oder mehrschichtig unter Einstellung einer vorgegebenen Hauptschrumpfrichtung mit quer zur Hauptschrumpfrichtung ineinandergreifenden Wellentälern bzw. Wellenbergen angeordnet und unter Druck/Temperatur-Beaufschlagung bis zum Schmelzen und Verbinden des Hüllenmaterials verpreßt werden.

3. Verfahren nach Anspruch 1 oder 2, dadurch gekennzeichnet, daß die Mehrkomponentenfäden mit Kunststoff/Silan-Kernen oder Peroxid-Kernen erzeugt und im Wege einer Konditionierung vernetzt werden.

4. Verfahren nach Anspruch 1 oder 3, dadurch gekennzeichnet, daß eine Mehrzahl verstreckter Mehrkomponentenfäden dicht bei dicht oder in engen Abständen in Parallellage nebeneinander gelegt und mit wärmestabilen nicht schrumpfenden Fäden quer zur Hauptschrumpfrichtung belegt bzw. im Wege einer Bindung fixiert, z. B. verflochten, verknüpft oder verwebt werden.

5. Verfahren nach einem der Ansprüche 1 bis 4, dadurch gekennzeichnet, daß die Mehrkomponentenfäden im Wege der Coextrusion hergestellt werden.

6. Verfahren nach einem der Ansprüche 1 bis 5, dadurch gekennzeichnet, daß die Mehrkomponentenfäden mit einer Kunststoffhülle aus Polyethylen und mit einem Fadenkern aus mit Silan belegtem Polyethylen coextrudiert werden.

7. Verfahren nach einem der Ansprüche 1 bis 6, dadurch gekennzeichnet, daß die Mehrkomponentenfäden bei einer Temperatur im Bereich von 80 °C bis 190 °C, vorzugsweise 80 °C bis 95 °C konditioniert, z. B. in wäßriger Lösung gelagert werden.

8. Verfahren nach einem der Ansprüche 1 bis 7, dadurch gekennzeichnet, daß die Oberfläche der Verbundstruktur strahlend vernetzt wird.

9. Verfahren nach einem der Ansprüche 1 bis 8, dadurch gekennzeichnet, daß die Oberfläche der Verbundstruktur ein- oder beidseitig mittels einer unverstreckten Schicht bzw. Beschichtung verstärkt wird.

## Claims

1. A method for the manufacture of a heat-restorable material web of at least one polymeric plastic material and of a tear-limiting reinforcement inlay, in particular for the formation of casings which are able to be shrunk onto cable connections and/or cable branches, in which multiple-component threads are produced with a plastic covering and with a thread core, of plastic or of an elastic synthetic material, able to be chemically polymerized in lattice-like form, the thread cores are polymerized in lattice-like form, the multiple-component threads thus treated are stretched by a specified extent, then a portioned plurality of stretched multiple-component threads are arranged in a single layer or in several layers with the setting of a specified main shrinkage direction and are pressed under the action of pressure/temperature up to the melting and bonding of the casing material.

2. A method for the manufacture of a heat-restorable material web of at least one polymeric plastic material and of a tear-limiting reinforcement inlay, in particular for the formation of casings which are able to be shrunk onto cable connections and/or cable branches, in which multiple-component threads are produced with a plastic covering and with a thread core, of plastic or of an elastic synthetic material, able to be chemically polymerized in lattice-like form, the thread cores are polymerized in lattice-like form, the multiple-component threads thus treated are corrugated and with corrugated orientation are stretched by a specified extent or vice versa are first stretched by a specified extent and then corrugated, then a portioned plurality of corrugated multiple-component threads are arranged with the formation of a mat-like mesh in a single layer or in several layers with the setting of a specified main shrinkage direction with wave troughs or respectively wave peaks engaging into each other transversely to the main shrinkage direction, and are pressed under the action of pressure/temperature up to the, melting and bonding of the casing material.

3. A method according to Claim 1 or 2, characterised in that the multiple-component threads are produced with plastic/silane cores or peroxide cores and are polymerized in lattice-like form in the way of a conditioning.

4. A method according to Claim 1 or 3, characterised in that a plurality of stretched multiple-component threads are placed close together or at close spaces in parallel position adjacent to each other and are covered with thermally stable non-shrinking threads transversely to the main shrinkage direction or are fixed in the way of a binding, e.g. are plaited, tied or interwoven.

5. A method according to one of Claims 1 to 4, characterised in that the multiple-component threads are manufactured in the way of coextrusion.

6. A method according to one of Claims 1 to 5, characterised in that the multiple-component threads are coextruded with a plastic casing of polyethylene and with a thread core of polyethylene covered with silane.

7. A method according to one of Claims 1 to 6, characterised in that the multiple-component threads are conditioned at a temperature in the range of 80 °C to 190 °C, preferably 80 °C to 95 °C, e.g. are stored in aqueous solution.

8. A method according to one of Claims 1 to 7, characterised in that the surface of the composite structure is cross-linked in lattice-like form in a radiating manner.

9. A method according to one of Claims 1 to 8, characterised in that the surface of the composite structure is reinforced on one or both sides by means of an unstretched layer or coating.

## Revendications

1. Procédé de fabrication d'une bande thermorétractable constituée d'au moins une matière plastique polymère et d'une garniture de renfort limitant la déchirure, en particulier pour former des gaines rétractables sur des raccords de câble et/ou des dérivations de câble, dans lequel des fils à plusieurs composant sont produits avec une gaine de matière plastique et un noyau de fils chimiquement réticulable en matière plastique ou dans une matière élastique, les noyaux de fils sont réticulés, les fils à plusieurs composants ainsi traités sont étirés d'une longueur donnée, puis plusieurs fils à plusieurs composants étirés, constituant une portion, sont disposés en une couche ou en plusieurs couches par réglage d'une direction donnée de retrait principal et sont pressés sous l'action d'une pression et de la température jusqu'à fusion et assemblage du matériau de la gaine.

2. Procédé de fabrication d'une bande thermorétractable constituée d'au moins une matière plastique polymère et d'une garniture de renfort limitant la déchirure, en particulier pour former des gaines rétractables sur des raccords de câble et/ou des dérivations de câble, dans lequel des fils à plusieurs composants sont produits avec une gaine de matière plastique et un noyau de fils chimiquement réticulable en matière plastique ou dans une matière élastique, les noyaux de fils sont réticulés, les fils à plusieurs composants ainsi traités sont ondulés et étirés avec orientation ondulée d'une valeur donnée ou inversement sont étirés seulement d'une valeur donnée puis ont ondulés, ensuite plusieurs fils à plusieurs composants ondulés, constituant une partion sont disposés pour former une structure entrelacée à la manière d'un mat ou en plusieurs couches, par réglage d'une direction donnée de retrait principal avec des creux d'onde ou des sommets d'onde s'engageant les uns dans les autres transversalement à la direction principale du retrait et sont pressés sous l'action d'une pression et de la température jusqu'à fusion et assemblage du matériau de la gaine.

3. Procédé salon la revendication 1 ou 2, caractérisé en ce que les fils à plusieurs composants sont produits avec des noyaux de matière plastique/silane ou des noyaux de péroxyde et sont réticulés au cours d'un conditionnement.

4. Procédé sel an la revendication 1 au 3, caractérisé en ce que plusieurs fils à plusieurs composants étirés sont posés côte à côte, les uns contre les autres ou à des distances étroites, dans une position parallèle et sont garnis de fils stables à la chaleur, non rétractables, transversalement à la direction principale du retait ou sont fixés au cours d'un assemblage, par exemple tressés, noués ou tissés.

5. Procédé sel on l'une des revendications 1 à 4, caractérisé an ce que les fils à plusieurs composants sont réalisés au cours de la coextrusion.

6. Procédé selon l'une des revendications 1 à 5, caractérisé en ce que les fils à plusieurs composants sont coextrudés avec une gaine en matière plastique en polyéthylène et avec un noyau de fils an polyèthylène garni de silane.

7. Procédé selon l'une des revendications 1 à 6, caractérisé en ce que les fils à plusieurs composants sont conditionnés à une température de l'ordre de 80 °C à 190 °C, de préférence comprise entra 80 °C et 95 °C, par exemple stockés dans une solution aqueuse.

8. Procédé selon l'une des revendications 1 à 7, caractérisé en ce que la surface de las structure composite est réticulée par rayonnement.

9. Procédé selon l'une des revendications 1 à 8, caractérisé en ce que las surface de la structure composite est renforcée sur l'une ou les deux faces au moyen d'une couche ou d'un revêtement non étiré.
